# EUROPEAN PATENT SPECIFICATION

(11) **EP 3 305 607 B1**
(45) Date of publication and mention of the grant of the patent: **06.11.2019**
(21) Application number: 16192692.8
(22) Date of filing: 06.10.2016
(51) Int. Cl.: B60R 25/021

(54) **STEERING COLUMN LOCK**
LENKSÄULENSCHLOSS
ANTIVOL SUR DIRECTION

(43) Date of publication of application: 11.04.2018
(73) Proprietor: U-Shin France, 94000 Créteil (FR)
(72) Inventor: PERRIN, Christophe, 94000 Créteil (FR); COUSIN, Arnaud, 94000 CRETEIL (FR)
(74) Representative: Verriest, Philippe

(56) References cited:
- EP-A1- 2 679 453
- EP-A1- 2 716 508
- EP-A1- 2 974 913
- EP-A1- 3 002 160
- EP-A1- 3 034 364
- WO-A1-2016/050874
- DE-A1- 19 915 747
- FR-A1- 3 007 355
- FR-A1- 3 012 094

## Description

The invention relates to a steering column lock for an automotive vehicle, as well as an automotive vehicle comprising such a steering column lock.

It is known a steering column lock comprising:
- a first part comprising a barrel with a rotor intended to rotate according to a lock rotation axis and comprising a receiving end intended to receive a key insert and a command end transmitting the rotation movement of the rotor,
- a second part comprising a cam intended to rotate according to a cam rotation axis, the cam is rotated by the command end of the lock,
- a third part comprising a lock bar mounted in translation according to a lock bar translation axis between a steering column lock position and a steering column release position, the lock bar being mobile in translation by the rotation of cam.

The lock bar translation axis, the cam rotation axis and the lock rotation axis are not parallel. In other words, the steering column lock has a Y shape. Although good specifications, such steering column lock needs a location around the steering column with an important volume.

EP2679453 discloses an alternative embodiment where the axes of the lock, of the cam and of the bar are all parallel to each other: such an embodiment also requires a specific volume in order to be integrated to the steering column.

However, there is a need for placing other car elements, such as integrated GPS and radio, in the area of the steering column.

There is then a need for a steering column lock which is efficient, reliable and requires a reduced volume around the steering column lock.

According to an aspect, the invention has for object a steering column lock for an automotive vehicle comprising:
- a first part comprising a barrel with a rotor intended to rotate according to a lock rotation axis and comprising a receiving end intended to receive a key insert and a command end for transmitting the rotation movement of the rotor,
- a second part comprising a cam intended to rotate according to a cam rotation axis, the cam is rotated by the command end of the rotor,
- a third part comprising a lock bar mounted in translation according to a lock bar translation axis between a steering column lock position and a steering column release position, the lock bar being mobile in translation by the rotation of cam,
the cam being connected to the command end of the rotor and to the lock bar through the cam peripheral surface,
characterized in that the bar translation axis and the cam rotation axis are parallel together and not parallel with the lock rotation axis, an in that said steering column comprises a lever linked to a sensor for determining the presence of a key insert inserted in the rotor and connected to the barrel and to the lock bar, with return means associated with the lever.

Thanks to the specific configuration of the steering column lock of the invention, it is possible to reduce the overall size of the steering column lock. Therefore, the steering column is efficient, reliable and able to be placed in a small location in the automotive vehicle.

According to further optional embodiments, which can be considered alone or in combination, the steering column lock of the invention also comprises:
- the cam and the command end of the rotor are connected by a gear connection; and/or
- the cam gear has a diameter smaller than the rotor gear; and/or
- the lock bar is mounted in a slider which is connected to the cam; and/or
- a return spring is associated with the lock bar; and/or
- the steering column lock comprises a protection plate for disposed at an end of the cam, a return means being disposed between the protection plate and the cam.

According to another aspect, the invention also has for object an automotive vehicle comprising a steering column and a steering column lock of the invention.

Characteristics and advantages of the invention will appear at the reading of the description of the following figures, among which:

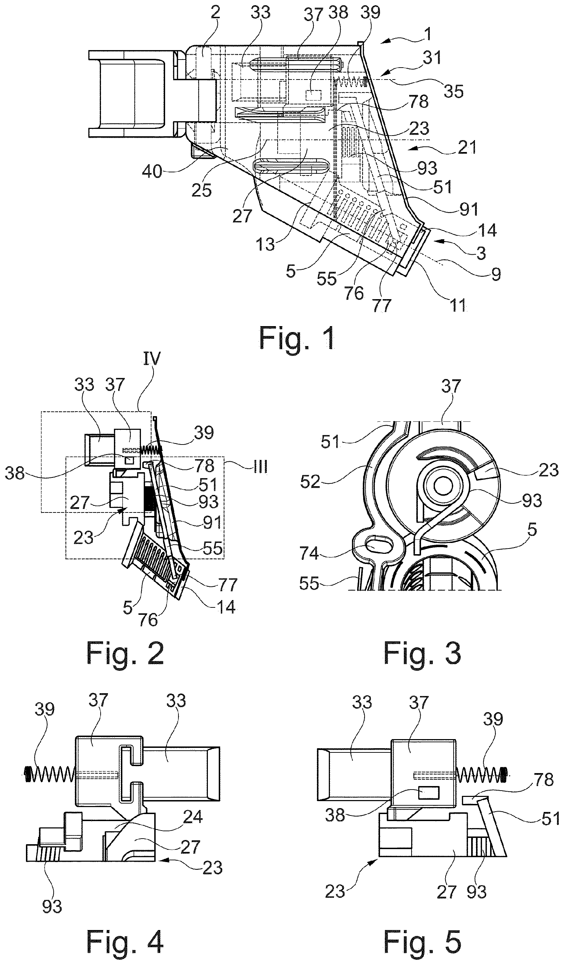

- figure 1 is a schematic side view of an embodiment of a steering column lock of the invention and a steering column,
- figure 2 is a partial side view corresponding of the steering column lock figure 1 without the housing,
- figure 3 is a front view of zone III of the embodiment of figure 2;
- figure 4 and figure 5 are side views of zone IV of the embodiment of figure 2;

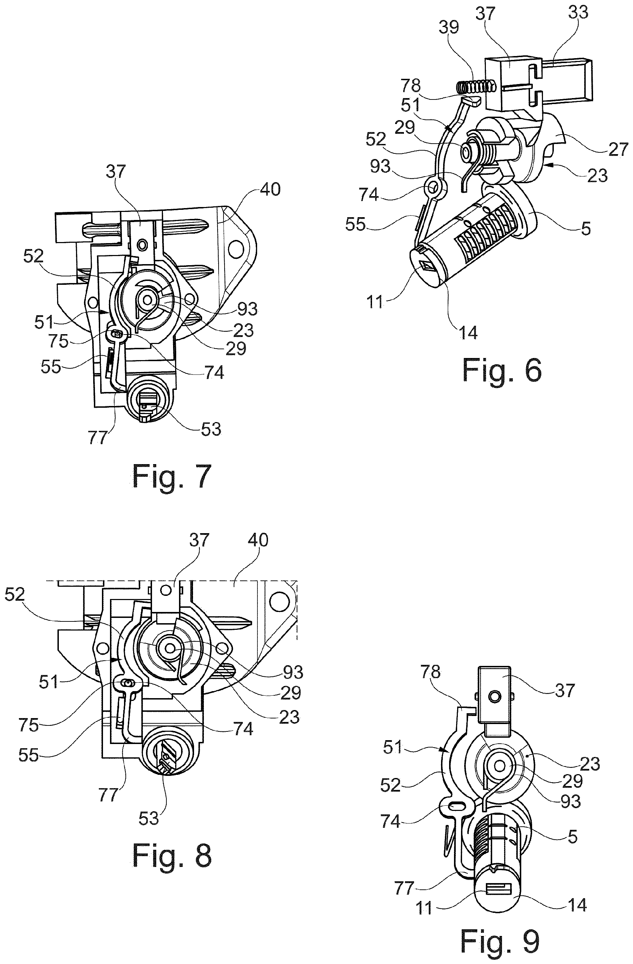

- figure 6 is a partial side view of the embodiment of figure 2;
- figure 7 is a front view corresponding of the embodiment of figure 1 wherein an authorized key insert is inserted in the barrel;
- figure 8 is a front view corresponding of the embodiment of figure 6 wherein the authorized key insert is rotated in the barrel;
- figure 9 is a partial front view of the embodiment of figure 6 without the housing and wherein the insert of key is extracted from the barrel.

On all the figures, the same elements are referred to with the same number.

As illustrated in the figures, the steering column lock 1 of the invention is intended to be used in an automotive vehicle (not shown). The steering column lock 1 of the invention may comprise a first part 3 comprising a barrel (not shown) with a rotor 5 intended to rotate according to a lock rotation axis 9. The barrel may also have a stator which is disposed around the rotor 5. The stator may be made in one or several parts. The rotor 5 may define a recess for receiving the insert of a key. Some flakes (not shown) may be put inside such recess for preventing the introduction of unauthorized key inserts inside the rotor 5.

The barrel also comprises a receiving end 11 intended to receive a key insert and a command end 13 for transmitting the rotation movement of the rotor 5. The receiving end may also comprise an antidrill plate 14 for preventing the drill and the access of the rotor 5 to unauthorized user.

The steering column lock 1 of the invention also comprise a second part 21 comprising a cam 23 intended to rotate according to a cam rotation axis 25, the cam 23 is rotated by the command end 13 of the rotor 5.

The cam 23 and the command end 13 of the rotor 5 may be connected by a gear connection (not shown).

In such configuration, the cam gear may have a diameter smaller than the rotor gear. Such configuration enables to have an efficient and reliable movement between the cam 23 and the rotor 5.

The cam 23 also comprises a part distinct from the part having the connection with the barrel. The said part may comprise a gear connection with a lock bar 33 or a guide connection 24 through a path made on the peripheral surface of the cam 23.

The steering column lock 1 of the invention also comprise a third part 31 comprising a lock bar 33 mounted in translation according to a lock bar translation axis 35 between a steering column 2 lock position and a steering column 2 release position, the lock bar 33 being mobile in translation by the rotation of the cam 23. The lock bar 33 may be mounted in a slider 37 which is connected to the cam 23.

A return spring 39 may be associated with the lock bar 33. The return spring 39 may be a compression spring.

The steering column lock 1 of the invention may be received in an housing 40 intended to protect such lock 1.

According to the invention, the bar translation axis 35 and the cam rotation axis 25 are parallel and the cam 23 is connected to the command end 13 of the lock and to the lock bar 33 through the cam peripheral surface 27. In other words, the bar translation axis 35 and the cam rotation axis 25 are parallel together and not parallel with the lock rotation axis 9. Therefore, the steering column lock 1 of the invention enables to lock and unlock the steering column 2 in an efficient and reliable way with a compact configuration.

The lock rotation axis 9 has an angle non null with the bar translation axis 35 and the cam rotation axis 25.

The steering column lock 1 of the invention may also comprise a lever 51 for determining the presence of a key insert 53 inserted in the rotor 5 and connected to the barrel and to the lock bar 33, the said lever 51 having a part 52 with a shape complementary to the shape of the cam 23. According to the embodiment shown in the drawings, the cam 23 has sensibly a cylindrical form. Therefore, the said part 52 has a partial circular shape which enables the lever 51 to be built in one part. A return means 55 may be associated with the lever 51. As an example, the return means may be a flexible strip.

The lever 51 has a pivot point disposed between the cam 23 and the barrel. The lever 51 may comprise a hole 74 comprising the pivot point and cooperating with a pin 75. The hole 74 may be of an circular or elongated shape.

The lever 51 may also comprise a receiving end 77 connected to the barrel, specifically to a key sensor 76 which enables to detect an authorized key inserted in the rotor 5. The lever 51 may also comprise a second end 78 which is configured for being received in a recess 38 disposed in the lock bar 33. The said recess 38 may alternatively be disposed on the peripheral surface of the lock bar slider 37.

The steering column lock 1 of the invention may also comprise a protection plate 91 for disposed at an end 29 of the cam 23, a return means 93 being disposed between the protection plate 91 and the cam 23. Such plate 91 enables to protect the steering column lock 1 of the invention, specifically the cam 23 against any direct attack with a tool on the said cam 23. As example of return means 93, one may cite a circular compression spring.

In use, by introducing an authorized key insert 101, the key sensor 76 goes out of the rotor 5, and of the barrel, and pushes on the lever 51, which turns at the pivot point around the pin 75.

By turning further the key insert 53 inside the barrel, the rotor 5 via the command end 13 rotates the cam 23. In the present embodiment, thanks to the slope of the guide connection 24, the cam 23 brings back the lock bar 33 inside the steering column lock 1 of the invention which unlocks the steering column 2.

The lock bar 33 coming in the steering column lock 1 of the invention comes in contact with the lever 51 which translates during the lock bar stroke. The oblong hole 74 associated with the pin 75 enables such translational and rotational movement.

At the end of the rotation of the key insert 53, the lock bar 33 is completely out of the steering column 2 and then inside the steering column lock 1 of the invention, and the lever 51 locks it by coming in the recess 38 of the lock bar 33, here the lock bar slider 37, thanks to the return spring 39 which pushes the said lever 51 inside the recess 38.

The lever 51 stays in such position on the barrel because the lever 51 is in contact with the key sensor 76, all along the key insert rotation.

A switch enabling the start of the engine may be linked to the cam 23. By turning the insert key 53 until the start contact, the said switch makes the engine start.

When the user wants to stop the vehicle, the user turns the insert key 53 to rotate the cam 23 and stop the engine. In this position, the lock bar 33 is not released.

When the user turns further the key insert 53, the lever 51 stays in the position in contact with the key sensor 76 during the rotation of the key insert 53, because of the diameter of the barrel. The lever 51 comes back at the non contact position, away from the key sensor 76. The cam 23 goes back in the first initial position.

Once the "Stop" contact is reached, the lock bar 33 is only held by the lever 51.

To release the lock bar 33, the user has to remove the key insert 53 from the barrel. When the user pulls on the key insert 53, the key sensor 76 is not in contact with the lever 51. Thanks to the lever return spring 55, the lever 51 pushes on the sensor key 76. Furthermore, the lock bar 33 being pushed by the return spring 39, when the lever 51 releases the lock bar 33, the lever 51 quickly goes to the steering column 2 and the column steering lock 1 of the invention finds the original first position. The key sensor 76 is inside the barrel. The lever 51 pushes on the said key sensor 76 and the lock bar 33 is inside the steering column 2 which is blocked in rotation and then cannot be turned.

## Claims

1. Steering column lock (1) for an automotive vehicle comprising:
- a first part comprising a barrel with a rotor (5) intended to rotate according to a lock rotation axis (9) and comprising a receiving end (11) intended to receive a key insert and a command end (13) for transmitting the rotation movement of the rotor (5),
- a second part (21) comprising a cam (23) intended to rotate according to a cam rotation axis (25), the cam (23) is rotated by the command end (13) of the rotor (5),
- a third part (31) comprising a lock bar (33) mounted in translation according to a lock bar translation axis (35) between a steering column lock position and a steering column release position, the lock bar (33) being mobile in translation by the rotation of cam (23),
the cam (23) being connected to the command end (13) of the rotor (5) and to the lock bar (33) through the cam peripheral surface,
**characterized in that** the bar translation axis (35) and the cam rotation axis (25) are parallel together and not parallel with the lock rotation axis (9) and, and **in that** said steering column lock (1) comprises a lever (51) linked to a key sensor (76) for determining the presence of a key insert (53) inserted in the rotor (5) and connected to the barrel and to the lock bar (33), with return means (55) associated with the lever (51).

2. Steering column lock (1) according to claim 1, wherein the cam (23) and the command end (13) of the rotor (5) are connected by a gear connection.

3. Steering column lock (1) according to the previous claim, wherein the cam gear has a diameter smaller than the rotor gear.

4. Steering column lock (1) according to any one of the previous claims, wherein the lock bar (33) is mounted in a slider (37) which is connected to the cam (23).

5. Steering column lock (1) according to any of the previous claims, wherein a return spring (39) is associated with the lock bar (33).

6. Steering column lock (1) according to anyone of the previous claims, comprising a protection plate (91) for disposed at an end of the cam (23), a return means (93) being disposed between the protection plate (91) and the cam (23).

7. Automotive vehicle comprising a steering column and a steering column lock (1) according to anyone of the previous claims.

## Patentansprüche

1. Lenksäulenschloss (1) für ein Kraftfahrzeug, umfassend:
- ein erstes Teil, einen Zylinder mit einem Rotor (5) umfassend, dazu bestimmt, sich um eine Schlossdrehachse (9) zu drehen, und ein Aufnahmeende (11), dazu bestimmt, einen Schlüsseleinsatz aufzunehmen, und ein Befehlsende (13) zum Übertragen der Drehbewegung des Rotors (5) umfassend,
- ein zweites Teil (21), umfassend einen Nocken (23), dazu bestimmt, sich um eine Nockendrehachse (25) zu drehen, wobei der Nocken (23) durch das Befehlsende (13) des Rotors (5) gedreht wird,
- ein drittes Teil (31), eine Schlossstange (33) umfassend, die translatorisch entlang einer Schlossstangen-Translationsachse (35) zwischen einer Lenksäulenverriegelungsposition und einer Lenksäulenfreigabeposition montiert ist, wobei die Schlossstange (33) durch das Drehen des Nockens (23) translatorisch beweglich ist,
wobei der Nocken (23) mit dem Befehlsende (13) des Rotors (5) und der Schlossstange (33) durch die Nockenumfangsoberfläche verbunden ist,
**dadurch gekennzeichnet, dass** die Stangen-Translationsachse (35) und die Nockendrehachse (25) parallel zueinander und nicht parallel zu der Schlossdrehachse (9) sind und dadurch, dass das Lenksäulenschloss (1) einen Hebel (51) umfasst, der an einen Schlüsselsensor (76) angeschlossen ist, um die Präsenz eines Schlüsseleinsatzes (53), der in den Rotor (5) eingesetzt ist und mit dem Zylinder und mit der Schlossstange (33) verbunden ist, mit Rückführmitteln (55) zu bestimmen, die dem Hebel (51) zugewiesen sind.

2. Lenksäulenschloss (1) nach Anspruch 1, wobei der Nocken (23) und das Befehlsende (13) des Rotors (5) durch eine Zahnradverbindung verbunden sind.

3. Lenksäulenschloss (1) nach dem vorstehenden Anspruch, wobei das Nockenzahnrad einen Durchmesser kleiner als das Rotorzahnrad aufweist.

4. Lenksäulenschloss (1) nach einem der vorstehenden Ansprüche, wobei die Schlossstange (33) in einem Schieber (37) montiert ist, der mit dem Nocken (23) verbunden ist.

5. Lenksäulenschloss (1) nach einem der vorstehenden Ansprüche, wobei der Schlossstange (33) eine Rückführfeder (39) zugewiesen ist.

6. Lenksäulenschloss (1) nach einem der vorstehenden Ansprüche, eine Schutzplatte (91) umfassend, um an einem Ende des Nockens (23) angeordnet zu werden, wobei ein Rückführmittel (93) zwischen der Schutzplatte (91) und dem Nocken (23) angeordnet ist.

7. Kraftfahrzeug, eine Lenksäule und ein Lenksäulenschloss (1) nach einem der vorstehenden Ansprüche umfassend.

## Revendications

1. Verrou de colonne de direction (1) pour un véhicule automobile comprenant :
- une première partie comprenant un cylindre ayant un rotor (5) destiné à tourner selon un axe de rotation (9) du verrou et comprenant une extrémité de réception (11) destinée à recevoir un insert de clé et une extrémité de commande (13) pour transmettre le mouvement de rotation du rotor (5),
- une deuxième partie (21) comprenant une came (23) destinée à tourner selon un axe de rotation (25) de la came, la came (23) est mise en rotation par l'extrémité de commande (13) du rotor (5),
- une troisième partie (31) comprenant une barre de verrouillage (33) montée en translation selon un axe de translation (35) de la barre de verrouillage entre une position de verrouillage de la colonne de direction et une position de déverrouillage de la colonne de direction, la barre de verrouillage (33) étant mobile en translation par la rotation de la came (23),
la came (23) étant reliée à l'extrémité de commande (13) du rotor (5) et à la barre de verrouillage (33) par l'intermédiaire de la surface périphérique de came,
**caractérisé en ce que** l'axe de translation (35) de la barre et l'axe de rotation (25) de la came sont parallèles entre eux et non parallèles à l'axe de rotation (9) du verrou, et **en ce que** ledit verrou de colonne de direction (1) comprend un levier (51) relié à un capteur de clé (76) pour déterminer la présence d'un insert de clé (53) inséré dans le rotor (5) et relié au cylindre et à la barre de verrouillage (33), un moyen de rappel (55) étant associé au levier (51).

2. Verrou de colonne de direction (1) selon la revendication 1, dans lequel la came (23) et l'extrémité de commande (13) du rotor (5) sont reliées par une liaison par engrenages.

3. Verrou de colonne de direction (1) selon la revendication précédente, dans lequel l'engrenage de came a un diamètre inférieur à celui de l'engrenage de rotor.

4. Verrou de colonne de direction (1) selon l'une quelconque des revendications précédentes, dans lequel la barre de verrouillage (33) est montée dans un coulisseau (37) qui est relié à la came (23).

5. Verrou de colonne de direction (1) selon l'une des revendications précédentes, dans lequel un ressort de rappel (39) est associé à la barre de verrouillage (33).

6. Verrou de colonne de direction (1) selon l'une quelconque des revendications précédentes, comprenant une plaque de protection (91) disposée au niveau d'une extrémité de la came (23), un moyen de rappel (93) étant disposé entre la plaque de protection (91) et la came (23).

7. Véhicule automobile comprenant une colonne de direction et un verrou de colonne de direction (1) selon l'une quelconque des revendications précédentes.
